# EUROPÄISCHE PATENTSCHRIFT

(11) **EP 1 168 135 B1**
(45) Veröffentlichungstag und Bekanntmachung des Hinweises auf die Patenterteilung: **28.11.2007**
(21) Anmeldenummer: 01110535.0
(22) Anmeldetag: 28.04.2001
(51) Int. Cl.: G05G 1/14

(54) **Aufnahmevorrichtung für Pedale eines Kraftfahrzeugs**
Holding device for motor vehicle pedals
Dispositif de réception des pédales pour véhicules automobiles

(30) Priorität: 27.06.2000 DE 10031157
(43) Veröffentlichungstag der Anmeldung: 02.01.2002
(73) Patentinhaber: Dr.Ing. h.c. F. Porsche Aktiengesellschaft, 70435 Stuttgart (DE)
(72) Erfinder: Baumann, Hans-Uwe, 70437 Stuttgart (DE); Semmel, Dieter, 71686 Remseck (DE); Barbunopulos, Vasil, 71665 Vaihingen (DE)

(56) Entgegenhaltungen:
- EP-A- 0 430 600
- DE-A- 19 817 710
- JP-A- 6 219 327
- US-A- 5 398 569

## Beschreibung

Die Erfindung betrifft eine Aufnahmevorrichtung für Pedale eines Kraftfahrzeugs nach dem Oberbegriff des Anspruchs 1.

Die Pedalerie eines Kraftfahrzeugs umfaßt in bekannter Weise eine Baugruppe bestehend aus einem Gas-, Brems- und Kupplungspedal, die entweder einzeln oder zusammen auf einer Montageplatte in einem Kraftfahrzeug einbaubar sind. Bei einem Fahrzeug mit einem Automatgetriebe entfällt das Kupplungspedal, wobei bei einem Schaltgetriebe das Kupplungspedal benötigt wird. Aus der JP 06 21 93 27 A ist eine Aufnahmevorrichtung für Pedale eines Kraftfahrzeugs bekannt, wobei an einer Montageplatte ein Gaspedal, ein Bremspedal und ein Kupplungspedal schwenkbar gelagert sind. Das Kupplungspedal ist zwischen Schenkeln einer Aufnahme gehalten. Diese Aufnahmevorrichtung für Pedale bildet mit seinen Merkmalen den Oberbegriff des Anspruchs 1.

Aufgabe der Erfindung ist es, eine Aufnahmevorrichtung für Pedale eines Kraftfahrzeuges zu schaffen, die als Baueinheit die Pedale aufnimmt und bei einem Automatikgetriebe ein einfacher Ein- bzw. Ausbau des Kupplungspedals gewährleistet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß ein Kupplungspedal in einfacher Weise von einer Aufnahmevorrichtung herauslösbar bzw. einbaubar ist, ohne daß eine aufwendige Montage erforderlich wird. Dies wird in vorteilhafter Weise nach der Erfindung erreicht, indem das Kupplungspedal in einem Einsatz schwenkbar gehalten wird, der mit dem Pedal eine Baueinheit bildet. Diese Baueinheit wird zwischen zwei vorragenden Schenkeln der Montageplatte befestigt, so daß ein wahlweiser Einbau bzw. ein Entfall des Kupplungspedals möglich wird.

Damit der Entfall bzw. der Einbau des Kupplungspedals ohne großen Montageaufwand erfolgen kann, ist der Einsatz für das Kupplungspedal einerseits über einen vorhandenen durchgehenden Lagerbolzen (Schraube) für das Bremspedal und andererseits über eine separate Befestigungsschraube zwischen den zwei Schenkeln der Montageplatte befestigbar.

Eine optimale Verspannung des Pedaleinsatzes an der Montageplatte zwischen den Schenkeln erfolgt, indem der Lagerbolzen zur verschwenkbaren Aufnahme des Bremspedals mit einer übergesteckten Hülse des Bolzens verbunden ist, die eine Abstützung zwischen dem inneren Aufnahmeschenkel für den Einsatz und einem weiteren äußeren Abstützschenkel für einen Kopf des Lagerbolzens an der Montageplatte bildet.

Eine gute Stabilität der Befestigung nach der Erfindung wird insbesondere erreicht, indem der Einsatz im Querschnitt U-profilförmig ausgebildet ist und der Lagerbolzen sowie die Befestigungsschraube in einem Höhenabstand zueinander angeordnet werden.

Ein Ausführungsbeispiel der Erfindung ist in den Zeichnungen dargestellt und wird im Folgenden näher beschrieben.

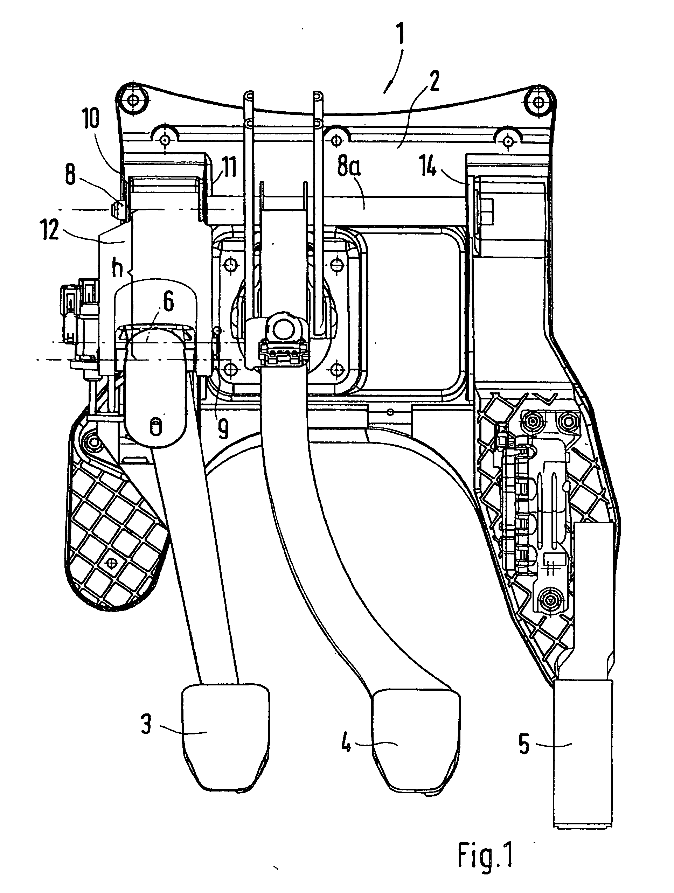

Es zeigen
- Fig. 1: eine Draufsicht auf eine Aufnahmevorrichtung der Pedale mit Kupplungs-, Brems- und Gaspedal,
- Fig. 2: eine schaubildliche Darstellung der Aufnahmevorrichtung mit über einen Einsatz eingesetztem Kupplungspedal und
- Fig. 3: eine Darstellung der Aufnahmevorrichtung von vorne gemäß Fig. 1 mit ausgebautem Kupplungspedal.

Die Aufnahmevorrichtung 1 umfaßt im Wesentlichen eine Montageplatte 2 mit einem Kupplungspedal 3, einem Bremspedal 4 und einem Gaspedal 5. Die Montageplatte 2 ist als eine Einheit mit den Pedalen 3, 4 und 5 beispielsweise an einer Stirnwand eines Fahrzeugs befestigbar.

Das Kupplungspedal 3 ist mit einem Einsatz 12 versehen, in dem das Pedal 3 auf einer Achse 6 schwenkbar gehalten ist. Der Einsatz 12 bildet mit dem Pedal 3 eine vormontierte fertige Baueinheit 7, die über Schrauben 8, 9 mit der Montageplatte 2 verbunden wird.

Hierzu weist die Montageplatte 2 zwei von der Montageplatte vorragende Schenkel 10, 11 auf, zwischen denen der Einsatz 12 bei einem Schaltgetriebe einsetzbar und bei einem Automatikgetriebe entfallen kann.

Die Befestigung des Einsatzes 12 erfolgt über die Schrauben 8, 9, welche in der Höhe h beabstandet zueinander angeordnet sind. Die oben liegende Schraube 8 ist vorhanden und dient gleichtzeitig als Lagerachse für das Bremspedal 4; wobei sie mit einer Hülse 8a versehen ist, die schwenkbar auf der Schraube 8 lagert und mit dem Bremspedal 4 fest verbunden wird.

Die Hülse 8a erstreckt sich zwischen dem innen liegenden Schenkel 11 der Aufnahme für den Einsatz 12 und einem außenliegenden Schenkel 14 an der Montageplatte 2. Hierdurch erfolgt eine sichere Abstützung des Einsatzes 12 durch die zwischenliegende Hülse 8a an den Schenkeln 11 und 14.

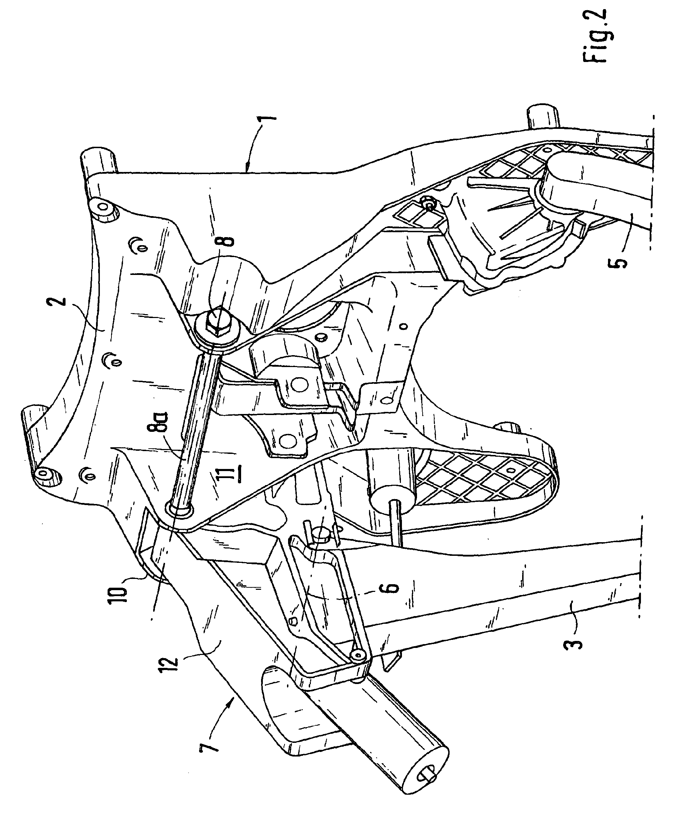

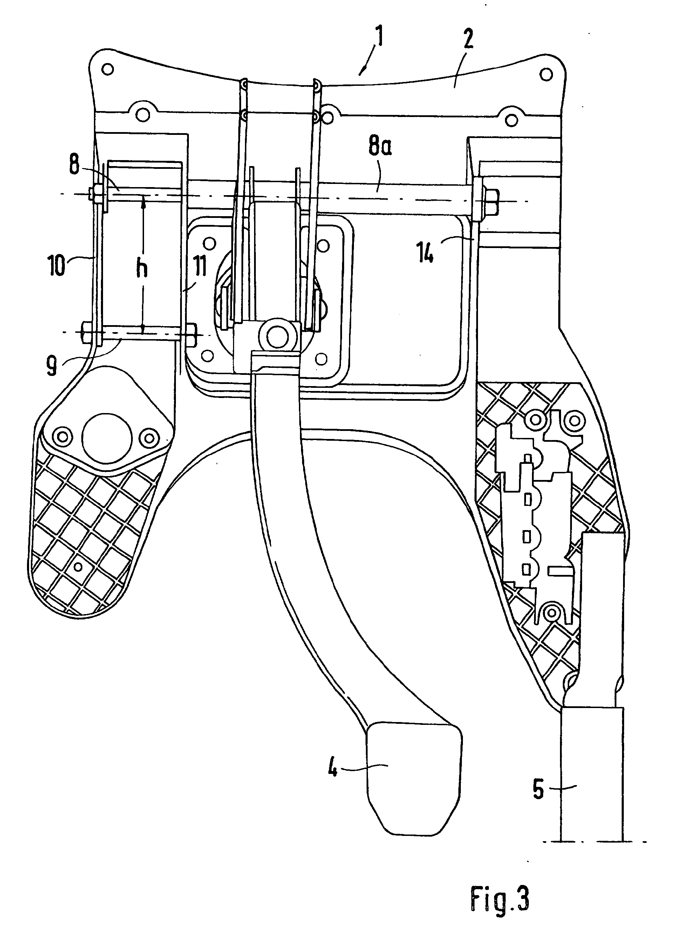

Wie in Fig. 2 näher dargestellt ist, weist der Einsatz 12 im Querschnitt ein U-profilförmiges Profil auf, deren Außenschenkel den Schenkeln 10, 11 der Montageplatte 2 gegenüberstehen. Bei Entfall des Kupplungspedals 3, wie Fig. 3 näher zeigt, wird die Schraube 8 unverändert verwendet, wobei die Schraube 9 beispielsweise entfallen kann.

## Patentansprüche

1. Aufnahmevorrichtung für Pedale eines Kraftfahrzeugs, die eine Montageplatte (2) umfaßt, auf der ein Gaspedal (5), ein Bremspedal (4) und ein Kupplungspedal (3) schwenkbar gelagert sind, wobei das Kupplungspedal (3) in einem Einsatz (12) schwenkbar gehalten ist, der mit dem Kupplungspedal (3) eine vormontierbare Baueinheit (7) bildet, die zwischen zwei vorragenden Schenkeln (10, 11) der Montageplatte (2) befestigbar ist, **dadurch gekennzeichnet, daß** der Einsatz (12) einerseits über eine vorhandene durchgehende Schraube, (8) für das Bremspedal (4) und andererseits über eine weitere Schraube (9) zwischen den zwei Schenkeln (10, 11) der Montageplatte (2) befestigbar und wahlweise herausnehmbar ausgebildet ist.

2. Aufnahmevorrichtung nach Anspruch 1, **dadurch gekennzeichnet, daß** der Einsatz (12) im Querschnitt U-profilförmig ausgebildet ist und der Schraube (8) sowie die weitere Schraube (9) in einem Höhenabstand (h) zueinander angeordnet sind.

3. Aufnahmevorrichtung nach den Ansprüchen 1 oder 2, **dadurch gekennzeichnet, daß** der Schraube (8) zur verschwenkbaren Aufnahme des Bremspedals (4) mit einer übergesteckten Hülse (8a) der Schraube (8) fest verbunden ist, die eine Abstützung zwischen dem inneren Aufnahmeschenkel (11) für den Einsatz (12) und einem weiteren äußeren Abstützschenkel (14) an der Montageplatte (2) für einen Kopf der Schraube (8) bildet.

## Claims

1. A holding device for pedals of a motor vehicle, the holding device comprising a mounting plate (2) on which an accelerator pedal (5), a brake pedal (4) and a clutch pedal (3) are pivotably mounted, wherein the clutch pedal (3) is pivotably held in an insert (12) which, together with the clutch pedal (3), forms a premountable structural unit (7) which is securable between two projecting arms (10, 11) of the mounting plate (2), **characterised in that** the insert (12) is securable between the two arms (10, 11) of the mounting plate (2) by means of an existing through bolt (8) for the brake pedal (4) on the one hand and by means of a further bolt (9) on the other hand and is optionally removable.

2. A holding device according to claim 1, **characterised in that** the insert (12) is formed with a U-shaped cross-section, and the bolt (8) and the further bolt (9) are vertically spaced apart by an amount (h).

3. A holding device according to claim 1 or claim 2, **characterised in that** the bolt (8) for pivotably mounting the brake pedal (4) is fixedly connected to a sleeve (8a) of the bolt (8), the sleeve (8a) being placed over the bolt (8) and forming a support between the inner holding arm (11) for the insert (12) and a further, outer supporting arm (14) on the mounting plate (2) for a head of the bolt (8).

## Revendications

1. Dispositif de montage pour les pédales d'un véhicule automobile qui comporte une plaque de montage (2) sur laquelle une pédale d'accélérateur (5), une pédale de frein (4) et une pédale d'embrayage (3) sont positionnées de manière pivotante, la pédale d'embrayage (3) étant fixée de manière pivotante dans une pièce d'insertion (12) qui forme avec la pédale d'embrayage (3) une unité modulaire pouvant être préassemblée (7) qui peut être fixée entre deux branches en saillie (10, 11) de la plaque de montage (2), **caractérisé en ce que** la pièce d'insertion (12) est conçue pour pouvoir être fixée et extraite à volonté entre les deux branches (10, 11) de la plaque de montage (2), d'une part, au moyen d'une vis traversante (8) présente pour la pédale de frein (4) et, d'autre part, au moyen d'une autre vis (9).

2. Dispositif de montage selon la revendication 1, **caractérisé en ce que** la pièce d'insertion (12) a une section transversale en forme de profil en U et **en ce que** la vis (8) ainsi que l'autre vis (9) sont placées à une distance en hauteur (h) l'une par rapport à l'autre.

3. Dispositif de montage selon la revendication 1 ou 2, **caractérisé en ce que** la vis (8) pour le positionnement pivotant de la pédale de frein (4) est reliée fixement avec une douille (8a) de la vis (8) insérée par-dessus qui constitue un appui entre la branche de logement intérieure (11) pour la pièce d'insertion (12) et une autre branche d'appui extérieure (14) sur la plaque de montage (2) pour une tête de la vis (8).
